# EUROPEAN PATENT APPLICATION

(11) **EP 3 231 667 A1**
(43) Date of publication of application: **18.10.2017**
(21) Application number: 16164617.9
(22) Date of filing: 11.04.2016
(51) Int. Cl.: B60Q 3/00, B60Q 3/80, F21W 101/08, F21V 23/04, F21Y 115/10

(54) **VEHICLE INTERIOR LIGHTING CONTROL MODULE AND METHOD OF CONTROLLING VEHICLE INTERIOR LIGHTING**

(71) Applicant: Philips Lighting Holding B.V., 5656 AE Eindhoven (NL)
(72) Inventor: The designation of the inventor has not yet been filed
(74) Representative: Verweij, Petronella Daniëlle

(57) **Abstract**

An interior lighting control module (200) comprises an input module (201) for extracting ambient light and speed information from ambient light and speed sensor signals, a processing module (203) for calculating an interior lighting response from the ambient light and vehicle speed information; and an output module (204) configured to control at least one luminaire (104) based on the interior lighting response calculated by the processing module (203).

## Description

### FIELD OF THE INVENTION

This invention relates to a vehicle interior lighting control module and a method of controlling vehicle interior lighting.

### BACKGROUND OF THE INVENTION

Road lighting serves to make roads safer for drivers, riders and pedestrians. The provision of road lighting can improve road safety by reducing the number of night-time road traffic accidents.

As well as providing more extensive road lighting, considerable developments have been made in improving road lighting technology. For example, light emitting diode (LED) luminaires possess the advantages of being energy efficient, long-lasting and more environmentally benign. This has led to LED luminaires replacing traditional light sources in numerous applications including in road lighting applications.

However, there are some drawbacks for LED road lighting. For example, the smaller light sources result in the surface luminance of the luminaire becoming brighter. This can result in greater glare being perceived by drivers when driving under LED lighting.

Furthermore, the output beam shape of the road lighting is designed for optimal horizontal light distribution on the surface of the road and thus neglects to consider the vertical illuminance incident on the driver's eye. The regular (or fairly regular) positioning of road lights results in the vertical illuminance incident on the driver's eye rising and falling as the vehicle progresses along the road. This variation in vertical illuminance incident on the driver's eye may be termed a 'flicker effect'.

Given, that road lighting luminaires tend to be fairly regularly-spaced along the road, the frequency of the flickering is in large part determined by the speed of the vehicle. This flicker effect may become more uncomfortable for the driver and passengers of the vehicle when travelling at higher speeds since the fluctuations can be perceived to be more pronounced at higher frequencies. Particularly during longer night-time journeys, sustained exposure to this flicker effect can result in discomfort and visual fatigue.

Thus there exists a need for alleviating this flicker effect such that drivers and passengers may travel at night more comfortably and experience less visual fatigue.

### SUMMARY OF THE INVENTION

The present invention seeks to provide a vehicle interior lighting control module that can compensate the aforementioned flicker effect.

The present invention further seeks to provide a method of controlling an interior lighting arrangement of a vehicle to compensate such flicker effects.

The invention is defined by the claims.

In accordance with an aspect of the invention, there is provided a vehicle interior lighting control module comprising:
an input module configured to extract ambient light information from an ambient light sensor signal provided by at least one ambient light sensor; and extract vehicle speed information from a vehicle speed sensor signal provided by a speed sensor;
a processing module configured to calculate an interior lighting response from the extracted ambient light information and vehicle speed information; and
an output module configured to control at least one luminaire based on the interior lighting response calculated by the processing module.

The present invention is based on the realization that the periodicity in flicker effects caused by street lighting at regular intervals from each other may be compensated by controlling the interior lighting of a vehicle with a control signal having the same periodicity as the flicker effect but being in counter phase therewith such that the intensity-varying ambient lighting and the intensity-varying internal lighting combine to form a relatively constant lighting level within the interior of the vehicle, thereby largely cancelling out the flicker effects experienced by the inhabitants of the vehicle interior.

To this end, the interior lighting control module controls the interior lighting of a vehicle according to both speed and ambient light information in order to assist alleviating of visual fatigue caused by ambient light variation. Although the periodicity of the ambient light variation may be extracted from ambient light information provided by an ambient light sensor, an important realization of the present invention is that the delay in compensating for such ambient light variations resulting from the processing of the ambient light information significantly complicates and may prevent the effective compensation of such variations by generating an interior lighting control signal in counter phase with the ambient light variations. The process of calculating an interior lighting response and controlling the at least one luminaire may be especially slow in comparison to the rate of change of ambient light conditions at higher speeds. The processing module is therefore configured to calculate an interior lighting response based on speed of the vehicle such that the interior lighting control module is able to rapidly anticipate changes in ambient light conditions caused by a change in speed of the vehicle in order to provide an accurate real-time interior lighting response as changes in period of the ambient light variations can be directly extrapolated from the change in speed of the vehicle due to the fact that the spacing between individual street lamps is relatively constant.

The lighting control module may be configured to control an intensity and/or a spectral composition of light provided by the at least one luminaire.

Control over the intensity of the light provided by the at least one interior luminaire may assist in matching the intensity of the interior lighting of the vehicle to the instantaneous intensity of the ambient light such that extent to which the variation of ambient light intensity is experienced or perceived by the occupant(s) of the vehicle is lessened. Similarly, the spectral composition provided by the at least one interior luminaire may be controlled by the lighting control module such that the extent to which the variation of the spectral composition of the ambient light is experienced or perceived by the occupant(s) of the vehicle is lessened.

The vehicle interior lighting control module may be configured to periodically vary the intensity of light provided by the at least one luminaire to compensate for periodic variations in the ambient light intensity extracted from the ambient light information, e.g to vary the intensity of light provided by the at least one luminaire with the same periodicity as the ambient lighting variations but in counter phase therewith.

The intensity of the ambient light incident on the vehicle may increase and decrease periodically as a result of, for example, the vehicle moving along a road lit by regularly-positioned road lights. This periodic variation of ambient light intensity may be compensated for by the at least one luminaire being controlled such that it produces a periodically varying light intensity which, for example, may match the periodic intensity variation of the ambient light but may be in counter phase therewith. In this way, the periodic variation of ambient light intensity is to a lesser extent experienced or perceived by the occupant(s) of the vehicle.

A vehicle body control module may comprise the lighting control module.

A vehicle body control module (BCM) is a term used in the art for a unit which is used for the controlling and communicating with various electronic accessories (such as the electric windows, electric mirrors, air conditioning, central locking etc.) in a vehicle's body or interior. Thus in an example of the present invention, the interior lighting control module forms a constituent part of a vehicle's body control module, which has the advantage that fewer separate components are required to implement the control system of the vehicle, thereby reducing cost and complexity.

In an embodiment, the present invention further provides a vehicle interior lighting system comprising:
the vehicle interior lighting control module or the vehicle body control module according to one or more of the above embodiments;
at least one ambient light sensor adapted to sense ambient light conditions and to provide the vehicle interior lighting control module with the ambient light sensor signal; and
at least one luminaire adapted to illuminate the interior of the vehicle in response to a control signal provided by the output module of the lighting control module.

The vehicle lighting control system provides the requisite components for sensing ambient light conditions, and controlling and effecting the illumination of the interior of the vehicle according to the present invention. An ambient light sensory signal is provided by the at least one ambient light sensor which provides an input signal for the interior lighting control module from which to calculate a control signal for illuminating the at least one luminaire in order to compensate for flicker effects in the ambient lighting as previously explained.

The system may comprise a speed sensor configured to sense the speed of the vehicle and to provide the vehicle interior lighting control module with the vehicle speed sensor signal. The speed sensor may be the vehicle's inbuilt speedometer or alternatively may be a separately-supplied speed sensor to be fitted to the vehicle.

The speed sensor provides a signal which may be used by the interior lighting control module to assist in compensating for fluctuations of ambient light intensity. In an example, the speed of the vehicle may be used along with information extracted from the ambient light sensor to derive the distance between regularly-spaced road lights. This calculated distance may be used to rapidly anticipate changes in ambient light fluctuation frequency resulting from changes in speed detected by the speed sensor.

In an example, the at least one ambient light sensor is configured to detect ambient light intensity and/or ambient light spectral composition.

Detection of the intensity of the ambient light incident on the vehicle, permits the vehicle lighting control module to calculate an interior lighting response which may, for example, be such that the periodicity in intensity variations of the light provided by the at least one luminaire matches the periodicity of the intensity variations of the ambient light but is in counter phase therewith. Similarly, detection of the spectral composition of the ambient light may, for example, permit matching of the spectral composition with the light provided by the at least one luminaire to provide an overall lighting effect within the vehicle that is relatively constant in terms of spectral composition.

The at least one luminaire of the system may include a LED luminaire such as a LED strip, a LED backlight or a LED spot light.

The inclusion of LED luminaires in the least one luminaire may provide the at least one luminaire with various benefits such as energy efficiency and long-lifetime.

The present invention further provides a vehicle comprising the vehicle interior lighting system.

The vehicle may be a road vehicle such as a car, bus, van or truck; or a non-road vehicle such as a train or elevator car.

The at least one ambient light sensor may fixed on or near to at least one of the windows of the vehicle.

The at least one ambient light sensor may be positioned to detect incident ambient light entering the interior of the vehicle such that for example it may detect similar ambient light conditions as experienced by an occupant of the vehicle.

For example, fixing the at least one ambient light sensor on or near to the windscreen of the vehicle may assist in detecting ambient light conditions experienced by the driver.

The at least one luminaire may be fixed on one or more of the interior roof, floor, door, seat, shelf, instrument panel and interior appendage of the vehicle.

The positioning of the at least one luminaire inside the vehicle such as on the interior roof, floor etc. may for example assist in compensating for the vertical illuminance incident on the eyes if the occupant(s) due to overhead ambient road lighting.

In accordance with an aspect of the invention, there is provided a method of controlling an interior lighting arrangement of a vehicle comprising:
sensing the speed of the vehicle and an ambient light condition of the vehicle;
extracting ambient light information from the sensed ambient light condition and extracting vehicle speed information from the sensed vehicle speed;
calculating an interior lighting response from the extracted ambient light information and vehicle speed information; and
controlling the interior lighting arrangement according to the calculated interior lighting response.

In an example, the method may further comprise periodically varying the intensity of the interior lighting to compensate for periodic variations in the ambient light intensity extracted from the ambient light information.

In another example, the method may comprise matching the spectral composition of the interior lighting to the spectral composition of the ambient light extracted from the ambient light information.

### BRIEF DESCRIPTION OF THE DRAWINGS

It should be understood that the detailed description and specific examples, while indicating exemplary embodiments of the systems and methods, are intended for purposes of illustration only and are not intended to limit the scope of the invention. These and other features, aspects, and advantages of the apparatus, systems and methods of the present invention will become better understood from the following description, appended claims, and accompanying drawings in which:
Figure 1 shows a block diagram of the vehicle interior lighting system;
Figure 2 shows a block diagram of the vehicle interior lighting system including the constituent modules of the interior lighting control module;
Figure 3 shows a schematic drawing of a vehicle and speed sensor;
Figure 4 shows a schematic drawing of a controller area network (CAN) electronic control unit;
Figure 5 shows a schematic drawing of a vehicle moving along a road lit with road lighting;
Figure 6 shows a graph of vertical illuminance on the driver's eye from ambient road lighting eye as a function of distance along a road;
Figure 7 shows a graph of vertical illuminance on the driver's eye provided by the vehicle's interior lighting as a function of time;
Figure 8 shows a graph of vertical illuminance of the driver's eye resulting from the combination of ambient road lighting and the vehicle's interior lighting as a function of distance along a road;
Figure 9 shows a schematic drawing of the interior of a vehicle including the position of the luminaires; and
Figure 10 shows a flowchart of the method of controlling the interior lighting according to an aspect of the present invention.

### DETAILED DESCRIPTION OF THE EMBODIMENTS

When travelling at night in a vehicle along a road which is lit by road lights spaced at approximately regular intervals along the road, the combined effects of the motion of the vehicle and the ambient lighting provided by the road lights results in periodic variation of the vertical illuminance incident on the driver's eye which may be termed a 'flicker effect'.

For example, the occupant(s) of a vehicle driving along a road with the speed of 80 km/h encountering road lights positioned 30 m apart would experience a frequency of ambient light variation of 0.74Hz. This is well within the range of frequencies that are detectable by the human eye. Light varying at detectable frequencies may be perceived as irritating and may lead to fatigue, headache and other unwanted physical effects in a person experiencing light varying at detectable frequencies for a certain period of time. Therefore, it is desirable to limit the exposure of occupants of a vehicle to such detectable light intensity variations, i.e. flicker effects.

In an embodiment of the present invention, the flicker effect is compensated by controlling the interior lighting of the vehicle using an interior lighting control module according to the present invention.

The interior lighting control module comprises an input module which extracts light intensity and speed information supplied by signals from respective light and speed sensors.

The interior lighting control module further comprises a processing module which calculates an interior lighting response using the extracted light intensity and speed information. The processing module uses the extracted light intensity information to calculate the period of ambient light intensity variation and combines the period of the ambient light intensity variation with the speed of the vehicle to derive the distance between the road lights. The processing module may then use the calculated distance between road lights to calculate an interior lighting response according to the measured speed of the vehicle.

This interior lighting control module further comprises an output module which uses the calculated interior lighting response to control the intensity of lighting produced by at least one interior luminaire by producing a control signal for controlling the at least one interior luminaire such that the at least interior luminaire produces a periodically varying luminous output having a periodicity that matches the periodicity of the variations in the ambient lighting but is in counter phase therewith such that the variation in the overall light levels experienced by one or more occupants of the vehicle is significantly reduced.

In this way, the interior lighting control module of the present invention provides adaptive control over the the interior lighting of the vehicle to compensate for periodic variations in ambient light intensity resulting from driving along a road lit by regularly-spaced road lights. Given that the processing module is able to calculate the distance between road lights, the processing module is also able to rapidly and proactively adjust the variation of the intensity of the interior lighting according to the changing speed of the vehicle.

At this point it is noted that it is in theory possible to generate the control signal to control the at least one interior luminaire as explained above from the ambient lighting information provided by the at least one ambient lighting sensor only as the changes in periodicity of the ambient lighting variations caused by a change in the speed of the vehicle can be derived from the ambient lighting information only. However, due to the processing time required to determine the periodicity of the ambient lighting variations from the obtained ambient lighting information, the control signal including the compensation information for the at least one interior luminaire will be generated with a certain delay, which complicates the effective compensation of the variations in ambient lighting intensity, e.g. requires complex calibration schemes.

Advantageously, the predictive capability of the lighting control module brought by use of the speed input avoids placing high demand on the sampling accuracy, sampling frequency and response time of the device which would otherwise be required if only light intensity information was used (i.e. without the benefit of the speed information). For example, a distance D between individual road lamps may be derived from the determination of an initial periodicity P of ambient lighting variations in the ambient lighting information provided by the at least one ambient lighting sensor for a vehicle travelling at a constant velocity V as determined with a speed sensor fitted to the vehicle by the following formula D = V/P in which V may be expressed in m/s and P may be expressed in Hz to obtain a distance D in meters between individual road lamps. Consequently, for the given distance D, an actual periodicity Pact may be calculated from the actual velocity V_{ac}t of the vehicle by: Pact = V_{act}/D.

In an embodiment, the ambient light sensor provides a signal which may be extracted by the input module to provide ambient light intensity information. The processing module uses the intensity information to provide an interior lighting response whereby the intensity of light provided by the luminaire(s) provides a vertical illuminance incident on the driver's eyes which matches or is commensurate with that from the ambient lighting.

In an embodiment, the ambient light intensity information extracted from the ambient light sensor signal may be periodically evaluated to validate the distance D between individual street lamps, e.g. lamp posts, using the above formula. The determined distance D between individual lamp posts may be updated if a previously determined distance D differs from the actual determined distance D. In an embodiment, such a update is only performed if the previously determined distance D differs from the actual determined distance D by more than a defined amount in order to avoid unnecessary updating of the distance D to be used by the lighting control module in the calculation of the control signal of the at least one interior luminaire, as this may compromise response times of the at least one interior luminaire. Any suitable period for the periodic evaluation of the ambient light intensity information to validate the distance D between individual street lamps may be employed. For example, the ambient light intensity information may be evaluated in this manner every N^{th} period of the ambient lighting variation, in which N is an integer having a value of at least 1. N for example maybe 1, 2, 3, 4, 5 and so on.

The present invention further provides a vehicle interior lighting system comprising the above described interior lighting control module, ambient light sensor(s) and interior luminaire(s).

A suitable ambient light sensor may have a light intensity detection range for example between 0.1 1x and 1000 1x. Such a detection range may adequately sense changes in ambient light intensity provided by road lighting. A fast response light sensor, e.g. a sensor having a response frequency of up to 1kHz, may be used to detect the real-time light variation when driving.

In an example, this sensor may be located on the windscreen of the vehicle in order to detect incident light intensity from a position proximal to the driver's eye. In this way the vertical illuminance of the ambient light detected by the ambient light sensor is similar to that perceived by the driver. Alternatively or additionally, fixing the at least one ambient light sensor on or close to the rear windows or rear windscreen of the vehicle may assist in detection of light conditions experienced by passengers positioned towards the rear of the vehicle. In an embodiment, a vehicle may comprise a plurality of luminaires in different regions of the vehicle interior, e.g. at least one luminaire arranged to illuminate a driver position or front seat position and at least one luminaire arranged to illuminate a passenger position or backseat position. In this embodiment, the lighting system may comprise a single ambient light sensor with the interior lighting control module being configured to control the plurality of luminaires with a single control signal derived from the ambient light information extracted from the sensor signal provided by the single ambient light sensor. Alternatively, the lighting system may comprise a first ambient light sensor arranged to detect illumination conditions experienced in the driver position or front seat position and the second ambient light sensor arranged to detect illumination conditions experienced in the passenger position or backseat position, with the interior lighting control module being configured to generate a first control signal for the first luminaire illuminating the driver or front seat position from the ambient light information extracted from the illumination conditions detected by the first ambient light sensor and to generate a second control signal for the at least one luminaire illuminating the passenger or backseat position extracted from the illumination conditions detected by the second ambient light sensor. In this manner, the illumination of different zones or regions within the vehicle may be individually controlled.

In an example, the illuminance of the light incident on drivers' eye may be pre-calibrated.

A suitable luminaire may be used which may provide a variable intensity of the interior lighting. The intensity of interior lighting may be controlled to be commensurate with the ambient light intensity such that the variation of ambient light intensity is to a lesser extent experienced or perceived by the occupant(s) of the vehicle.

A suitable luminaire may be used which allows both the intensity and spectral composition of the light it provides to be controlled in order simultaneously to match the spectral composition and intensity of the interior lighting to the spectral composition and intensity of the ambient light incident on the vehicle.

The spectral composition of road lighting may vary depending for example on whether traditional or LED luminaries are used in the road lights. Traditional street sodium-vapor lamp lighting changes colour: when first turned on, the lamp may emit a dim red light whereas when operating normally (i.e. after having warmed up), the lamp may appear bright yellow. Hence in an embodiment, the ambient light sensor may additionally detect the spectral composition of the ambient light. The interior lighting response may match the spectral composition of the ambient light in order to reduce the extent to which the driver/occupant perceives changes in the spectral composition of the ambient light, as such changes in spectral composition may also be perceived as a flicker-like effect.

In an embodiment, the luminaires for providing the interior lighting of the vehicle may include LED luminaires such as LED strips, LED backlights, LED spot lights or other LED luminaires. The intensity of light provided by the LED luminaires may for example be controlled by using well-known pulse-width modulation (PWM). For example, a PWM frequency of several hundred hertz may be used in order to compensate for the rapid variation of the ambient light. As PWM control schemes are well-known per se, this will not be explained in further detail for the sake of brevity only.

Inclusion of LEDs in the luminaires can result in the interior lighting being more energy efficient. LEDs further provide the advantage of being long-lasting.

The spectral composition provided by the luminaires may by varied by employing three coloured (red, green and blue) fluorescent lamps. Alternatively, different coloured LEDs may be used. A luminaire comprising different coloured LEDs can generate various spectral compositions according to, for example, the spectral composition of the ambient light. This may be achieved by mixing the light generated from the coloured LEDs. For example, a luminaire comprising red, green and blue LEDs can provide a wide range of spectral compositions via variation of the intensity of light provided by each of the red, green and blue LEDs. As will be immediately understood by the skilled person, in such a scenario the different colour LEDs may be individually controlled to achieve a combined luminous output having the desired spectral composition. In the context of the present application, where reference is made to different coloured LEDs, this is intended to include LEDs generating white light of different colour temperatures.

Alternatively, the spectral composition provided by the luminaire may be adjusted using dynamic (mechanical) colour filters and wheels.

The invention will now be described in further detail with reference to the figures.

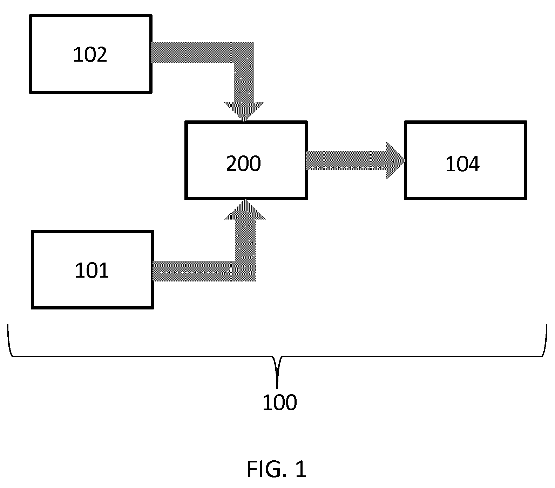

Figure 1 shows an embodiment of a vehicle interior lighting system 100 comprising an ambient light sensor 101 and a speed sensor 102. These sensors each provide a signal to the above described interior lighting control module 200 which controls a luminaire 104 according to the sensory input provided by the ambient light sensor 101 and the speed sensor 102 as explained in more detail above. Specifically, the interior lighting control module 200 is adapted to generate a control signal for the luminaire 104 based on a predicted periodicity in the intensity variations of the ambient light due to the regular intervals between the street lamps generating the ambient light as predicted from the velocity or speed of the vehicle as obtained from the speed sensor information. As previously explained, the interior lighting control module 200 is adapted to generate a control signal that controls the luminaire 104 such that the luminaire 104 produces a luminous output with periodically varying intensity, wherein the periodicity of this varying intensity matches the predicted periodicity in the intensity variations of the ambient light but is in counter phase therewith such that the overall lighting experienced by the occupants of the vehicle has a significantly reduced flicker effect.

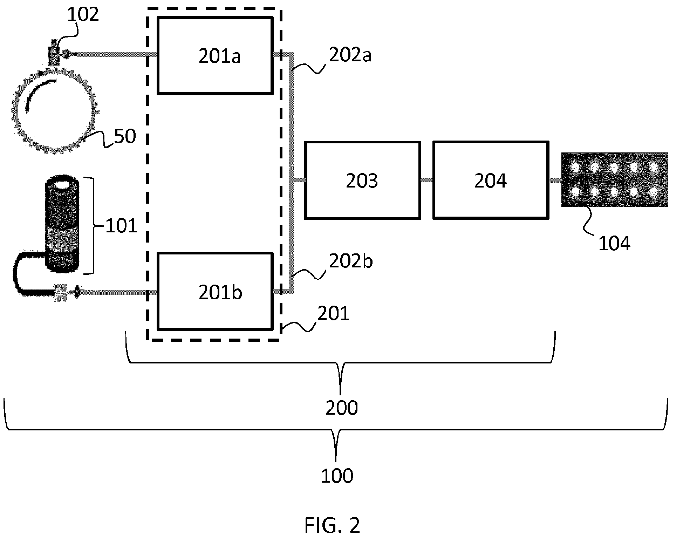

Figure 2 shows the vehicle interior lighting system 100, the ambient light sensor 101, speed sensor 102 driven by a gear 50 by way of non-limiting example only, and luminaire 104. The interior lighting control module 200 comprises an input module 201 which further comprises a module 201a for extracting speed information from a signal from the speed sensor 102 and a module 201b for extracting ambient light information from a signal from an ambient light sensor 101. The input module 201 is connected via communication buses 202a and 202b to a processing module 203 which calculates an interior lighting response based on the extracted speed and light information. The output module 204 controls the luminaire 104 based on the interior lighting response calculated by the processing module 203 as explained above. At this point, it is noted that the various components of the interior lighting control module 200 may be realized in any suitable manner, e.g. as discrete hardware components, in software running on a processing unit, e.g. a generic or application-specific processor, or any combination thereof.

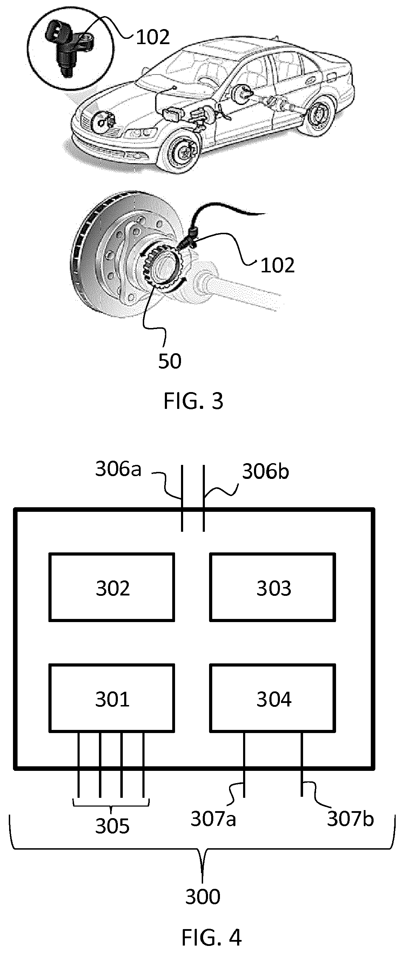

Figure 3 shows the speed sensor 102 driven by a gear 50 in an automobile. Such speedometer arrangements tend to be situated in the rear tail housing of the transmission in a conventional rear-wheel-drive vehicle. However, it will be immediately understood that this is by way of non-limiting example only and that the speed sensor 102 may be driven in any suitable manner, e.g. by a gear of a front-wheel-driven transmission, by a gear of an all-wheel-driven transmission, and so on. It should be understood that the speed sensor 102 may be driven in any suitable manner and may be located in any suitable location within a vehicle.

In an example embodiment, the communication buses utilized by the vehicle interior lighting system 100 may include at least one of a CAN bus and a LIN bus. Generally, vehicles use controller area network (CAN) and local interconnect network (LIN) buses to enable the implementation of intelligent electronics. In an embodiment, the interior lighting control module may incorporate CAN and/or LIN buses, thereby advantageously utilizing the bus architectures already present within such vehicles, which simplifies the integration of the vehicle interior lighting system 100 in such vehicles.

The CAN bus may be particularly suitable for implementing the present invention since it is capable of providing a rapid lighting response, i.e. a rapid control signal to the luminaire 104. A rapid lighting response may be required particularly when driving with higher speeds (such as 100 km/h) due to the higher frequency light intensity variation experienced by the vehicle occupant(s) at higher speeds.

Figure 4 shows an example embodiment of a controller area network (CAN) electronic control unit 300 which comprises input/output circuitry 301, a microcontroller 302, a CAN controller 303 and a line driver 304. The microcontroller may for example be based on a 16- or 32-bit core (such as a MSP430 or ARM-Mo) with a clock frequency for example between 16 and 25 MHz. The inputs/outputs 305 can be selected via the input/output circuitry 301. The CAN electronic control unit may be powered by connection to the vehicle's power supply via positive supply voltage 306a and ground 306b connections. The line driver 304 may employ two communication lines: CAN high 307a and CAN low 307b. It is noted that such a CAN electronic control unit 300 is well-known per se and is therefore not explained in further detail for the sake of brevity only.

In an embodiment, the CAN electronic control unit 300 may be adapted to include the interior lighting control module 200, e.g. by appropriate programming of the CAN electronic control unit 300. The speed and ambient light information may be both extracted and used to calculate an interior lighting response by the CAN electronic control unit 300. The lighting response of the luminaire 104 may also be controlled by the CAN electronic control unit 300. The CAN bus may be used to transmit extracted sensory information to the CAN electronic control unit 300. Thus in this embodiment the CAN electronic control unit 300 may fulfil the functions of the interior lighting control module 200.

In general, it should be understood that the one or more functions of the interior lighting control module 200 may be performed for example by a single electronic control unit, or alternatively a plurality of electronic control units.

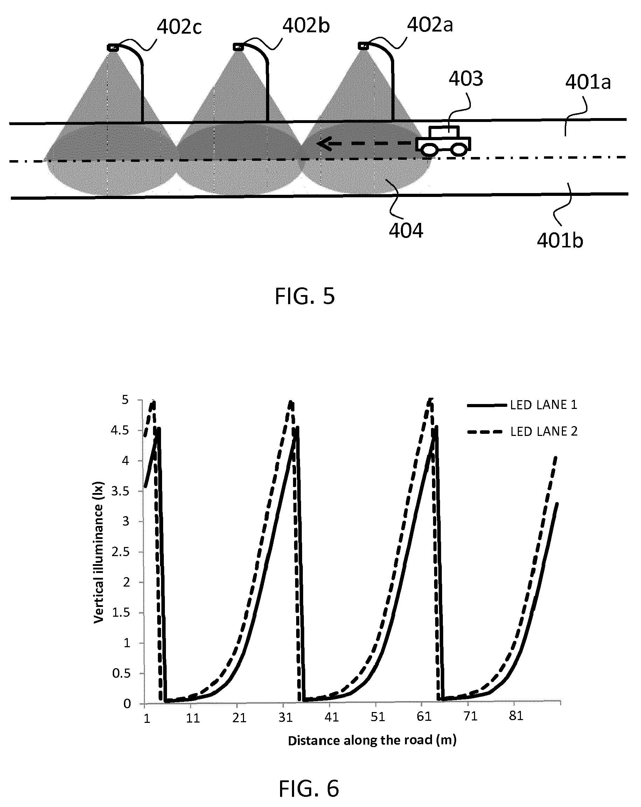

The operating principle of the interior light control module 200 will now be explained in further detail with the aid of Figures 5-8. Figure 5 shows two lanes 401a, 401b of a road lit by regularly-spaced road lights or street lamps 402a, 402b and 402c. The vehicle 403 encounters horizontal 'batwing' illuminances 404 on the surface of the road provided by the road lights 402a-402c. The road lighting is designed to optimise the horizontal illuminance provided by the road lights 402a-402c and thus to save energy by minimizing the number of required road lights. The effect of the road lights 402a-402c on the vertical illuminance at the height of the eye-line of driver of the vehicle 403 as a function of distance along the road is graphically represented in Figure 6.

Figure 6 shows the variation in vertical illuminance (y-axis, in 1x) as a function of distance along the road (x-axis, in m) for the two lanes 401a (solid line) and 401b (dashed line) of the road signified by the line and hashed line respectively. In this example, a car is travelling at 80 km/h and the road lights are positioned 30 m apart. The influence of the beam shape is simulated using a known road lighting beam shape of a Philips DM2E road lighting luminaire. The maxima in the vertical illuminance experienced by the driver coincide with the vehicle 403 passing directly adjacent to each of the road lights 402a-402c. The points lying midway between the road lights correspond to the vertical illuminance minima in the graph shown in Figure 6. Note that the vertical illuminance value varies widely in a range where the ratio between the maximum and minimum values is about 100 to 200 1x. Such variation in the vertical illuminance experienced by the driver is likely to cause significant visual discomfort when driving at higher speeds. The continuous fluctuation in vertical illuminance experienced during longer journeys may result in visual fatigue for the occupants of the vehicle including the driver.

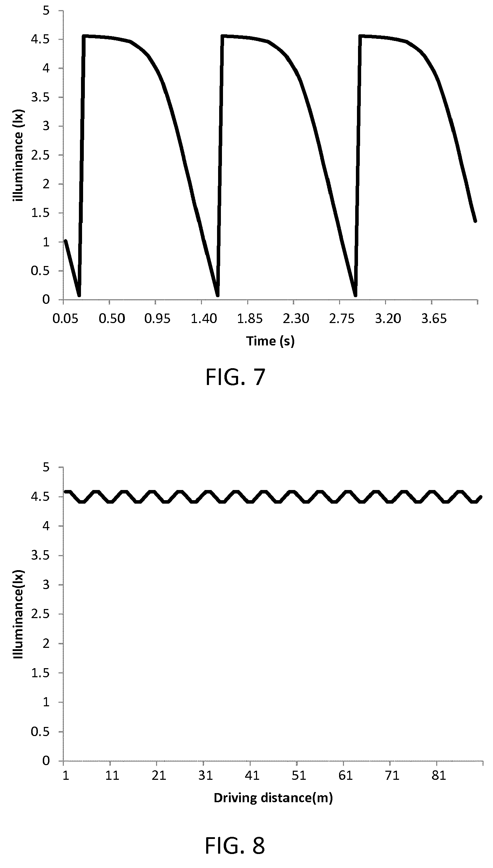

Figure 7 shows the vertical illuminance (y-axis, in 1x) provided by the interior luminaire 104 controlled by the interior lighting control module 200 of the present invention as a function of time (x-axis, in s). In an example, the period of the ambient light intensity variation and speed of the vehicle may be used to derive the distance between road lights which may then be used to predict a compensating interior lighting response using the speed of the vehicle as previously explained. In this manner, the interior light control module 200 may derive a control signal for controlling the interior luminaire 104 such that the periodicity in the luminous output of the luminaire 104 as shown in Figure 7 matches the periodicity of the variations in the luminous intensity of the ambient light experienced by the driver (or other occupant) of the vehicle but is in counter phase therewith to reduce the variations in light levels observed by the driver or other occupants of the vehicle as previously explained.

Figure 8 shows the overall vertical illuminance incident on the driver's eye (y-axis, in 1x) as a function of distance along the road (x-axis, in m) after implementation of the interior lighting response depicted in Figure 7 to compensate for the variation in vertical illuminance produced by the road lights 402a-c as shown in Figure 6. The ratio between the maximum and minimum values of vertical illuminance has been significantly reduced by the compensating interior lighting, i.e. the luminaire 104 controlled by a control signal causing the luminaire 104 to generate a luminous output having an intensity varying at the same frequency as the vertical illuminance produced by the road lights 402a-c but varying in counter phase therewith to substantially cancel out the variations in the vertical illuminance produced by the road lights 402a-c and observed by the driver or other occupants of the vehicle. Thus Figure 8 demonstrates that the variation in vertical illuminance resulting from the motion of the vehicle and the ambient road lighting may be effectively mitigated by controlling the interior lighting according to one or more embodiments of the present invention.

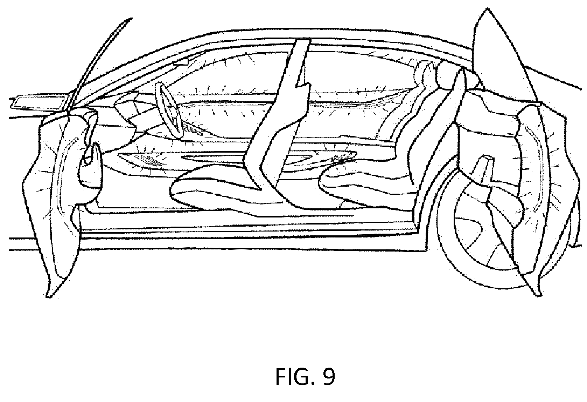

Figure 9 shows a schematic of the interior of a car showing exemplary locations of the luminaires 104 which provide the interior lighting. As shown in Figure 9, the luminaires 104 may be located in various parts of the interior such as on the doors, door storage pockets, floor and roof of the cabin. Positioning luminaires 104 proximally to both driver and passengers of the vehicle may assist to alleviate discomfort related to variation in ambient lighting for both driver and passengers. For example, positioning luminaires 104 proximally to the seating positions of passengers may provide more comfortable lighting conditions for reading during travel. Such positioning can provide the intended vertical illuminance effect on the eye of the vehicle occupant(s) as well as fulfil the other requirements of the interior lighting such as provision of a decorative lighting atmosphere. As previously explained, such luminaires 104 may be controlled using a global control signal generated by the interior light control module 200 or may be individually controlled by individual control signals generated by the interior light control module 200, e.g. in response to separate ambient light sensor signals as previously explained.

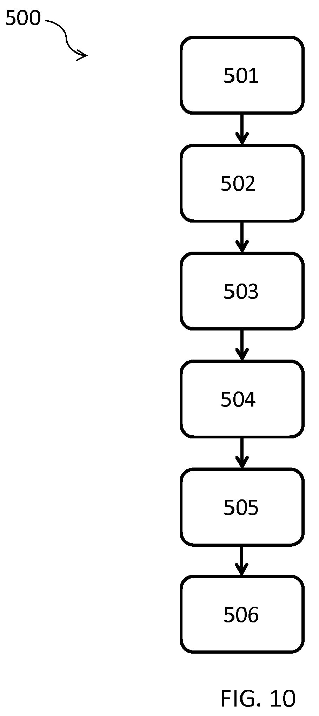

Figure 10 shows a flowchart method of controlling the interior lighting. The method commences in 501. Subsequently the speed of the vehicle and ambient light conditions are sensed in 502. The ambient light information and vehicle speed information are then extracted in 503 and an interior lighting response is calculated in 504 using the extracted ambient light and vehicle speed information in order to determine an interior lighting response having an intensity that varies at the same periodicity as the variations in the ambient light conditions but are in counter phase therewith as previously explained. The interior lighting arrangement is then controlled using the calculated interior lighting response in 505. The method subsequently ends in 506.

In an example, the interior lighting response calculation 504 involves calculating the distance between regularly-spaced road lights using the period of variation of the intensity of the ambient light and the speed of the vehicle. Based on the detected speed changes of the vehicle (or detection of constant speed), the interior lighting response calculation may further comprise using the calculated distance between regularly-spaced road lights and the measured speed of the vehicle to form a prediction of the variation in ambient light intensity in order to provide a proactive compensating interior lighting response. For example, if the vehicle is accelerating, the period of ambient light variation may be predicted to decrease accordingly. In this way the method of the present invention provides a means of adaptively responding to changes in ambient lighting conditions such that the interior lighting responds in real-time.

The visual discomfort associated with the flicker effect may be experienced by occupants of any vehicle moving past exterior ambient light sources. Thus the present invention may be implemented in other vehicles. Hence this invention may be implemented in a train or a subway train for the comfort of passengers travelling at night or through lit tunnels. A further application of the present invention may be for controlling the lighting of the interior of an elevator since the flicker effect may be experienced as the elevator ascends or descends a lit elevator shaft.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A vehicle interior lighting control module (200) comprising:
an input module (201) configured to:
extract ambient light information from an ambient light sensor signal provided by at least one ambient light sensor (101); and
extract vehicle speed information from a vehicle speed sensor signal provided by a speed sensor (102);
a processing module (203) configured to calculate an interior lighting response from the extracted ambient light information and vehicle speed information; and
an output module (204) configured to control at least one luminaire (104) based on the interior lighting response calculated by the processing module.

2. A vehicle interior lighting control module (200) as claimed in claim 1, wherein the lighting control module is configured to control an intensity and/or a spectral composition of light provided by the at least one luminaire (104).

3. A vehicle interior lighting control module (200) as claimed in claims 1 or 2, wherein the lighting control module is configured to periodically vary the intensity of light provided by the at least one luminaire (104) to compensate for periodic variations in the ambient light intensity extracted from the ambient light information.

4. A vehicle body control module comprising the lighting control module (200) of any of claims 1 to 3.

5. A vehicle interior lighting system (100) comprising:
the vehicle interior lighting control module (200) of any of claims 1 to 3 or the vehicle body control module of claim 4;
at least one ambient light sensor (101) adapted to sense ambient light conditions and to provide the vehicle interior lighting control module with the ambient light sensor signal; and
at least one luminaire (104) adapted to illuminate the interior of the vehicle in response to a control signal provided by the output module (204) of the lighting control module.

6. A system (100) as claimed in claim 5, wherein the system further comprises a speed sensor (102) configured to sense the speed of the vehicle and to provide the vehicle interior lighting control module (200) with the vehicle speed sensor signal; wherein the speed sensor is the vehicle's inbuilt speedometer or alternatively is a separately-supplied speed sensor.

7. A system (100) as claimed in claims 5 and 6, wherein the at least one ambient light sensor (101) is configured to detect ambient light intensity and/or ambient light spectral composition.

8. A system (100) as claimed in any of claims 5 to 7, wherein the at least one luminaire (104) includes a LED luminaire such as a LED strip, a LED backlight or a LED spot light.

9. A vehicle comprising the system (100) of any of claims 5 to 8.

10. The vehicle of claim 9, wherein the vehicle is a road vehicle such as a car, bus, van or truck; or a non-road vehicle such as a train or elevator car.

11. The vehicle as claimed in claim 9 or 10, wherein the at least one ambient light sensor (101) is fixed on or near to at least one of the windows of the vehicle.

12. The vehicle as claimed in any of claims 9-11, wherein the at least one luminaire (104) is fixed on one or more of the interior roof, floor, door, seat, shelf, instrument panel and interior appendage of the vehicle.

13. A method (500) of controlling an interior lighting arrangement of a vehicle comprising:
sensing the speed of the vehicle and an ambient light condition of the vehicle (502);
extracting ambient light information from the sensed ambient light condition and extracting vehicle speed information from the sensed vehicle speed (503);
calculating an interior lighting response from the extracted ambient light information and vehicle speed information (504); and
controlling the interior lighting arrangement according to the calculated interior lighting response (505).

14. A method (500) as claimed in claim 13, wherein controlling the interior lighting arrangement according to the calculated interior lighting response (505) comprises periodically varying the intensity of the interior lighting to compensate for periodic variations in the ambient light intensity extracted from the ambient light information.

15. A method (500) as claimed in claims 13 or 14, wherein controlling the interior lighting arrangement according to the calculated interior lighting response (505) comprises matching the spectral composition of the interior lighting to the spectral composition of the ambient light extracted from the ambient light information.
